# EUROPEAN PATENT SPECIFICATION

(11) **EP 2 464 244 B1**
(45) Date of publication and mention of the grant of the patent: **09.01.2019**
(21) Application number: 09848335.7
(22) Date of filing: 14.08.2009
(51) Int. Cl.: A23L 7/17, A23L 7/135, A23L 7/165, A23L 7/117

(54) **COOKING OF SALT FREE OR REDUCED SALT BREAKFAST CEREALS**
ZUBEREITUNG VON SALZLOSEN BZW. SALZARMEN FRÜHSTÜCKSCEREALIEN
CUISSON DE CÉRÉALES DE PETIT-DÉJEUNER SANS SEL OU À TENEUR RÉDUITE EN SEL

(43) Date of publication of application: 20.06.2012
(73) Proprietor: GENERAL MILLS, INC., Minneapolis, MN 55440 (US)
(72) Inventor: BINDZUS, Wolfgang, 1303 Penthaz (CH); HAHN, Stephanie, Welwyn Garden City Hertfordshire AL8 6PA (GB)
(74) Representative: Vossius & Partner Patentanwälte Rechtsanwälte mbB
(86) International application number: PCT/US2009/053813
(87) International publication number: WO 2011/019353

(56) References cited:
- EP-A1- 0 134 322
- EP-A1- 1 000 553
- WO-A1-99/34688
- US-A- 4 963 373
- US-A- 4 963 373
- US-A- 4 988 521
- US-A- 5 338 556
- US-A1- 2005 064 080
- US-A1- 2007 059 412
- US-A1- 2007 059 412
- US-A1- 2007 292 583
- US-B1- 6 210 720

## Description

### BACKGROUND OF THE INVENTION

The present invention relates to ready-to-eat or breakfast cereals of improved flavor and reduced salt content and to their methods of preparation.

Ready-to-eat cereals are well known and popular food items. Ready-to-eat ("R-T-E") or breakfast cereals come in a wide variety of shapes, sizes, compositions, and flavors. Of long standing popularity are traditional R-T-E cereals including unpuffed products such as whole wheat flakes, or corn flakes, and puffed cereals, including oat based puffed O's. Traditionally, the products have been and are prepared by extended cook steps which develop flavorful, fully cooked cereal flavors. While popular, R-T-E cereals having a traditional, fully developed cereal flavor characteristic of long cooking, typically have high salt contents. The salt content not only is important to the cereal flavor development during the extended cooking step, but also, salt acts as a strong flavor potentiator in the finished cereal product. Also, salt improves color generation and reduces required cook times.

Salt concentrations of from 2% to 4% have been typically used in the past for R-T-E cereal compositions. Due to the current health focus on sodium in the diet, however, present food industry trends have been to express salt content as milligrams sodium per ounce of product. In these units, a popular brand of traditional whole wheat flakes has in the past contained as much as 480 milligrams sodium per ounce of product (i.e., about 3% sodium chloride).

While salt reduction is desirable from a reduction in sodium dietary intake standpoint, the dietary benefits of reduced sodium intake has been seen as being achieved at the expense in the decline of benefits such as decline in the desirable taste, appearance and physical properties of the finished product. The finished low salt breakfast cereal products can have less cereal and toasting flavour, a bland taste and also lighter in color. Together, these negative changes in products attributes lead to lower product quality and risk of lower consumer acceptance for a staple food category that plays an important role in a healthy diet. Further, the low salt breakfast cereal may be more brittle leading to increased breakage and processing losses due to excessive fines generation. The finished products can exhibit less expansion and thus are harder and less tender in eating quality. While not noticeable to the consumer, salt reduction can also result in increased processing costs to the consumer food product manufacturer due to increased cook times. Increased cook times lead to increases in capital, labor and operating costs especially energy leading to higher product costs.

Various efforts have been made over the years to reduce the sodium content of R-T-E cereals while nonetheless maintaining, insofar as possible, the desirable popular flavor of such products. Conventionally, such approaches have been to substitute other cations (e.g., potassium and/or ammonium) for sodium, to increase the cooking step, to add flavor precursors, to increase minor flavor constituents, e.g., malt, and or to add sugars for browning (see, for example, US 4,963,373 "R-T-E Cereal Composition and Method of Preparation" issued Oct. 16, 1990 to Fan et al.) to offset the lack of color development. These approaches have met with some success in reducing the overall sodium content to about 300 milligrams sodium per ounce, while suffering some trade-offs with regard to flavor. In other approaches, the reduced salt content is partitioned between a first portion being part of the cooked cereal formulation and a second portion being topically applied for maximum flavor impact (See, for example, US 4,988,521 Ready-To-Eat Cereal of Reduced Sodium Content and Method of Preparation" issues Jan. 29, 1991 to Fan et al.).

EP 1 000 553 provides a process for preparing an extruder expanded, ready-to-eat cereal with toasted grain flavor, comprising: feeding a formulation comprising wheat flour and a tri alkali metal phosphate into a high-shear extruder with sufficient water to hydrate the formulation; heating and working the formulation under pressure within the extruder to sufficiently hydrate the formulation and gelatinize starch in the flour; extruding the formulation through a shaping die at an exit end of the extruder and cutting immediately upon exit from the die, thereby forming discrete, expanded cereal pieces.

WO 99/34688 relates to cooked cereal doughs containing defined levels of inulin or other oligo saccharides, to finished dried grain based products prepared therefrom and to methods for their preparation.

US 2005/0064080 relates to cooked cereal doughs containing high levels of both fiber and protein, to finished dried grain based products prepared therefrom especially R-T-E cereals and to methods for their preparation.

US 5,338,556 relates to a method of toasting thick untoasted R-T-E cereal flakes with high intensity microwave fields to provide finished toasted relatively thick flake R-T-E cereal products exhibiting improved toasted flavor, volume and eating qualities.

Notwithstanding this success, there is a continuing need for new and improved methods for providing traditional, fully cooked or developed cereal flavor in cereal compositions which nonetheless have reduced or even more reduced sodium contents.

The present invention is thus directed towards formulating and preparing cooked cereal masses with reduced salt levels that provide improved levels of color and cooked grain flavor in cooked cereal products relative to other low or no salt cooked cereal products and that approach the quality of higher salt levels products. Surprisingly, the present invention provides cereal cooking methods and products resulting there from that have improved, traditional cooked cereal flavor while nonetheless employ lower sodium levels. In one embodiment of the present invention, the present methods comprise improvements in traditional, slow cook cereal cooking preparation of a cooked cereal mass.

### BRIEF SUMMARY OF THE INVENTION

In its method aspect, the present invention resides in the method according to claim 1.

In its product aspect of one and the same invention, the present invention resides in the dry, low salt R-T-E cereal composition of claim 8.

### BRIEF DESCRIPTION OF THE DRAWINGS

Figure 1 depicts the pH and Conductivity of sodium chloride solutions, pH Adjusted with HCl of Example 2.
Figure 2 depicts the pH and Conductivity of sodium chloride solutions, pH Adjusted with Citric Acid results of Example 2.
Figure 3 depicts suitable ranges for pH values and conductivity values for practicing the present methods of preparing a cooked cereal.

### DETAILED DESCRIPTION OF THE INVENTION

The present invention relates to improved R-T-E cereals of reduced sodium content, according to claim 8, and to methods for their preparation, according to claim 1. The present methods comprise a step of cooking cereal ingredients at reduced salt (NaCl) levels and at reduced pH to off-set the negative effects of low salt levels. Each of these process steps as well as R-T-E cereal composition are described in detail below.

Throughout the specification and claims, percentages are by weight and temperatures in degrees Centigrade unless otherwise indicated. Each of the referenced patents or patent applications are hereby incorporated by reference.

In the preferred embodiment, the first essential step of the present cooked cereal composition preparation method involves cooking cereal composition ingredients in water or with moisture having a reduced salt level with moisture under reduced pH conditions. The improvement resides in important part in practicing the initial cooking step in at reduced salt levels but in an acidic bath or with acidified make-up water whereby adverse effects of salt reduction on end product quality is mitigated.

Surprisingly, another benefit of practicing the cooking step in or with a reduced pH water is reductions in cook times required to prepare the cooked hydrated cereal mass.

Surprisingly, still another benefit of practicing the cooking step in or with a reduced pH water is reductions in the development of undesirable acrylamide constituents in the finished breakfast cereal product.

In a preferred embodiment, the cooking step can be practiced in a batch mode. In this embodiment, the present cooking step- can include a preliminary pre- or sub-step of admixing cereal ingredients with low salt levels and acidic pH moisture to form an homogeneous blend and thereafter a sub-step of cooking the blend to form a low sodium cooked cereal mass.

A wide variety of food products are prepared from cooked cereal masses especially ready-to-eat ("R-T-E") or breakfast cereals, as well as a variety of snack products. While in the present application particular attention is made to the provision of low salt cooked cereal masses or doughs useful in the provision of breakfast cereal products, the skilled artisan will appreciate that the present invention is also useful in the provision of reduced salt cooked cereal doughs of improved quality useful in the preparation of such consumer food products as fried snacks. Generally in the preparation of the cooked cereal dough, cereal or farinaceous ingredients such as various cereal flours are first admixed with other dry ingredients such as salt especially NaCl, minerals, starch, sugars, to form a dry blend of ingredients and then is further blended with various liquid ingredients, including moisture or wet blend to form a mixed blend and the mixed blend is then heated to gelatinize or cook and hydrate the starch fraction of the cereal ingredients and other starchy materials. The gelatinized or cooked mass can then worked to form a cooked cereal dough. A wide variety of blending cooking, working apparatus and techniques are well known.

A cooked cereal dough can be prepared by blending various dry cereal ingredients together with water and cooking to gelatinize the starchy components and to develop a cooked flavor. The cooked material can also be mechanically worked to form a cooked cereal dough. The cooking and mechanical work can occur simultaneously or sequentially. The dry ingredients can also include various additives such as sugar(s), salt and mineral salts, e.g., trisodium phosphate, and starches. In addition to water, various liquid ingredients such as corn (maize) or malt syrups can be added. A cooked cereal mash is quite similar except that larger sized particles such as whole grains or cut grains are cooked rather than cereal flour ingredients.

An essential component of the present cereal compositions is a starchy cereal(s). The starchy cereal component can comprise any conventionally employed starchy cereal or, synonymously, farinaceous material, for use in a ready-to-eat cereal. Exemplary suitable starchy cereals include cereal grains, cut grains, grits or flours from wheat, rice, corn, oats, barley, rye, triticale or other cereal grains and mixtures thereof. The flours can be whole flours or flour fractions such as with the germ fraction or husk fraction removed or, alternatively, brans. Of course, the R-T-E cereal art is well developed and the skilled artisan will have no difficulty selecting suitable farinaceous materials for use herein.

Of course, the principal component of the present cereal composition is a starchy cereal component. The cereal component can comprise any conventionally employed starchy cereal or, synonymously, farinaceous material, for use in a ready-to-eat cereal. Exemplary suitable starchy cereals include such cereal as wheat, rice, corn, oats, barley, rye or other cereal grains and mixtures thereof. In a preferred variation, the cereal ingredients comprise principally whole cereal grains pieces or kernels. In still other variations, the grain pieces can comprise smaller kernel pieces such as cut kernels or fragments. In still other variations such as in the preparation of a cooked cereal dough, all or a portion of the cereal kernels can be substituted with cereal flours or other ground or milled cereal ingredients. The flours can be whole flours or flour fractions such as with the germ fraction or husk fraction removed. Of course, the R-T-E cereal art is well developed and the skilled artisan will have no difficulty selecting suitable farinaceous materials for use herein.

The starchy cereal component(s) can comprise from about 40 to 99% (dry basis) of the cooked cereal dough composition. Better results in terms of organoleptic attributes and reductions in R-T-E cereal piece frangibility are obtained when the cereal ingredient(s) comprises about 75 to 95% of the cooked cereal dough composition. For best results the cereal ingredients comprise about 80 to 95% of the present cereal products.

In one preferred embodiment, whole kernel wheat is used as the principle grain to provide a low pH reduced salt cooked cereal mash that can be further processed to provide an improved finished breakfast cereal product.

In certain preferred embodiments, all or a portion of the cereal ingredients can be provided in the form of whole grain flours especially in the provision of a cooked cereal dough. Such whole grain flours can thus include the bran and germ fractions in addition to the starchy fractions of refined cereal flours. Such whole grain flours will contribute native levels of the oil fraction associated with the whole grain, e.g., whole grain wheat flour will include native levels of wheat germ oil.

Another component of the blend is sufficient amounts of water or moisture, such that upon completion of the cooking step, adequate moisture is present to gelatinize and hydrate the starch component of the farinaceous material. Useful amounts of water essentially range from about 18% to 35% by weight of the homogeneous blend so as to achieve approximately these concentrations of moisture in the cooked cereal. Modest adjustments to the water addition are to be made in known manner, in view of any moisture gain from steam condensation occasioned by cooking. Better results are obtained when the water comprises about 21% to 23% to achieve a cooked cereal dough of such moisture content. In certain embodiments, the moisture addition can be practiced by application of steam that not only heats the cereal blend but also supplies moisture.

The present raw cereal components and other ingredients can be cooked and worked to form the present cooked cereal doughs by conventional cooked cereal dough preparation methods. The total moisture addition is controlled to provide a cooked cereal comprising about 10 to 60% moisture, preferably about 20 to 45% moisture.

The dry cereal ingredients are cooked with moisture or in a water bath for times and at temperature sufficient to hydrate and gelatinize the starch ingredients to provide a cooked cereal mass or dough. Importantly herein the moisture or water bath is characterized by both a reduced pH and conductivity value consistent with the provision of a low sodium content finished cereal product. Thus, the moisture or water bath herein is characterized in important part by a conductivity value ranging from 0.1-2.8 mSiemens /cm ("mS/cm"). It will be appreciated that a significant portion of the total conductivity is provided by any salt added as a dry ingredient together with the other dry ingredients especially the dry cereal ingredients such as whole grain kernels. Of course, specific salt concentrations within the above-described essential ranges will be modified and selected, in view of the end product attributes desired, as well as the farinaceous material(s) employed. All or a portion of the ionic moieties providing the requisite conductivity can be provided by common salt or added cereal ingredients. Generally, however, the salt concentrations employed herein are about 25% to 50% less than the salt levels which would otherwise be conventionally employed. Further, suitable selected salt concentrations will be modestly influenced by the finishing steps of flaking, puffing, toasting, etc. which are selected. Of course, the blend can additionally comprise modest amounts of sodium chloride substitutes or replacers such as potassium chloride. However, potassium chloride imparts to cereals a taste which some consumers find objectionably metallic. Thus, in preferred embodiments, the blend is substantially free of such salt substitutes (i.e., no potassium chloride is added).

Conventionally, salt concentrations, when used for whole wheat flakes, for example, have in the past ranged from about 250 to 400 milligrams per ounce (1428mg/100g) of dried R-T-E cereal. Such levels include any sodium contributed by the sodium associated with the ingredients. However, since these native levels are typically quite low, the principle source of the finished products' sodium content is from the salt commonly added, NaCl, during the cooking step. Generally, to achieve such salt concentrations in the finished product, the make-up cereal blend would comprise about 1.5% to 3.0% by weight added salt. In contrast, in the present invention, the blend essentially comprises from about 1.0% to less than 2% added salt, preferably 1.2% to 1.4%. For best results in terms of sodium ion concentration reduction balanced with flavor, the salt content should be about 1.4%.

In the following description, the skilled artisan will appreciate that principle emphasis is to obtain the benefits of added salt while minimizing the sodium level. For convenience, in reference to the present methods of preparation the present description generally refers to levels of added common salt. In preferred embodiments, the finished products are characterized by a total sodium content (including the contributions from any native sodium level from the ingredients combined with sodium of any added salt) of less than 500 mg of sodium per 100g (dry weight) of finished product. The emphasis on the total sodium content in the finished product reflects current health concerns regarding sodium consumption.

In still other embodiments, the present invention is directed to and can be practiced to provide finished breakfast cereal products having no added sodium (e.g., no added sodium chloride) (i.e., above the native level of sodium contributed by the native level of the ingredients themselves) having improved taste and appearance properties.

While sodium reduction is desired from a dietary benefit standpoint, higher salt concentrations do enhance other desirable in-process and end product attributes. This is due in part to the effects of salt on structural changes of starch in cereal formulations during the thermal processing steps, in particular cooking and toasting. In this, the level of salt impacts starch gelatinization, creation of soluble starch polymers and starch degradation (i.e., developing or converting a portion of the starch into low molecular weight compounds). Also, higher salt levels can have a beneficial effect on color and flavor reactions (Maillard and caramelization). Higher salt levels can also have a beneficial effect impact on penetration of water into starch granules and starch gelatinization that can lead to reduced cook times. Although effects may vary dependent upon type of salt, type of grain, degree of milling, or the type of cooking equipment, even modest changes in cook times can have dramatic economic consequences in the mass commercial manufacture of consumer breakfast cereal products. Thus, while reducing sodium content can have beneficial diet advantages, such advantages have previously come at the expense of losses or reductions in the advantages provided by higher salt levels.

Surprisingly, in the present invention, certain of the negative effects of reducing the salt level in the cooked cereal mash or dough can be ameliorated by the addition of sufficient amounts of edible acids to the finished dried breakfast cereal product. Useful to provide such reduced pH values are a variety of edible organic and mineral acids. Examples of suitable organic acids include citric acid, ascorbic acid, malic acid, tartaric acid, oxalic acid, and the like. Examples of edible mineral acids include phosphoric acid. Preferred for use herein are edible organic acids especially citric acid. In as much as edible organics are solids, addition of the preferred edible organic acids is conveniently practiced by addition of the edible organic acid together with the other dry ingredients to the dry ingredient blend. An organic acid can be included in an amount effective to provide a pH in a range of between 3.5 -5.7, preferably between 4.0 and 5.5, and more preferably 4.5-5.0 Good results are obtained when, for example, citric acid is added to the dry mix in concentrations ranging from 0.1-0.2%.

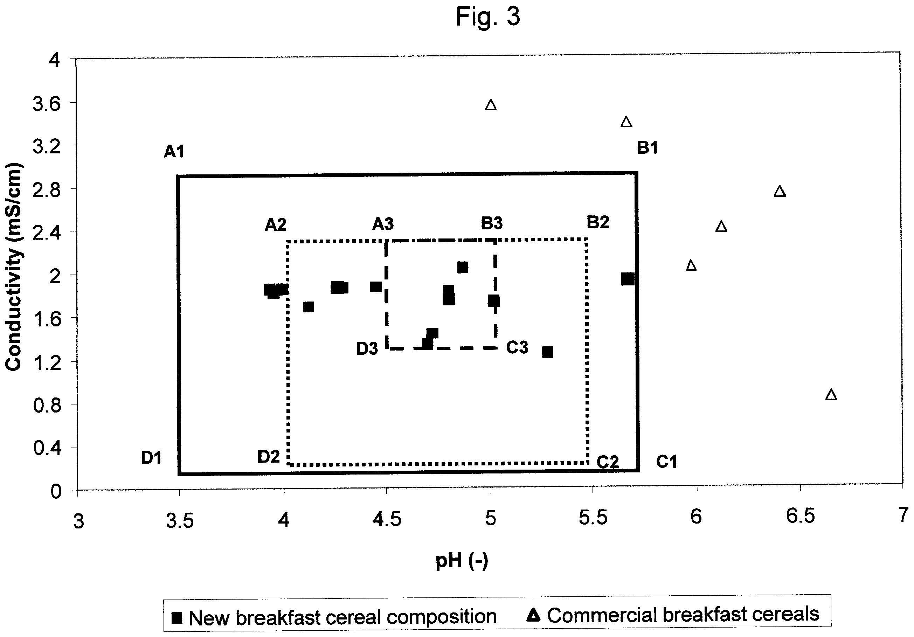

Reference is now made briefly to Fig.3 which shows the present invention selection of suitable conductivity values and pH values for preparation of low sodium content RTE cereal compared to known compositions that lie outside of the present range. Broadly, Fig 3 depicts that the present invention can be practiced by selecting a value for conductivity and pH within the box or are defined by the line A1-B1-C1-D1 (or "A1-D1" herein) i.e., having a pH ranging from 3.5 to 5.7 and a conductivity value of 0.1 to 2.8. Better results can be obtained by selecting a pH and conductivity values within the box or area of A2-D2; namely a pH ranging from 4.0 to 5.5 and a conductivity value of 0.1 to 2.4. For best results, values for pH and conductivity can be selected within the box or are defined by A3-D3; namely wherein the pH can range from 4.55 to 5.0 and the conductivity from 0.1 to 2.4.

The development of cooked cereal flavor is an extremely complex phenomenon. While the precise chemical pathways for cooked cereal flavor development are not fully understood, it has been surprisingly discovered that these pathways are apparently facilitated under reduced pH conditions. Also, the present invention practices the cooking step at reduced pH improves the end product's product appearance, flavor and texture. However, its saltiness taste perception per se is not particularly influenced by the present pH reduction.

If desired, the present cereal dough composition can additionally comprise certain non-cereal ingredients including, for example, about 0.1 to about 20% (dry weight) by weight sugar(s) or, synonymously herein, nutritive carbohydrate sweetening agents, preferably about 0.5% to 5%. Such materials are also well known in the R-T-E cereal art. Useful herein as the sugar component is sucrose. However, the sugar(s) component can additionally comprise conventional fructose, maltose, dextrose, honey, fruit juice solids, brown sugar, and the like. In addition to providing desirable sweetness, the sugar component additionally beneficially affects the cereal color and texture. Better results are obtained, especially for R-T-E cereal products, when the sugar(s) component comprises from about 1% to about 10% by weight of the composition.

In addition to the flour component, optional bulking agents can be included to provide added fiber, and/or reduce the caloric value of the finished cereal product. The bulking agent may be used as a replacement for all or a portion of the flour or cereal grains. Bulking agents which may be used include, for example, polydextrose, inulin, hemicellulose, microcrystalline cellulose, and mixtures thereof. Generally, when a bulking agent is used, the bulking agent is blended with a flour in amounts of up to about 20% by weight based upon the weight of the dough. Corn bran, wheat bran, oat bran, rice bran, and mixtures thereof may be used to replace the flour in whole or in part to produce a fiber-enriched product, to enhance color, or to affect texture. The bran may be included, for example, in amounts of up to about 20% by weight, based upon the weight of the dough. Generally the bran component will be included in amounts of about 1% to about 10% by weight, and preferably from about 2% to about 5% by weight, based upon the weight of the dough. In certain variations, corn bran is added to increase the insoluble fiber content of the finished product. In other variations, solubilized corn bran can be added to increase the soluble fiber content of the finished product.

The present cereal compositions can additionally comprise a variety of other minor ingredients intended to make the cereal compositions nutritionally, organoleptically or visually appealing. Such materials can include, for example, vitamins, mineral fortifiers, colors, and flavors. If present, these materials can each comprise from about 0.1% to 2% by weight of the composition. Especially preferred for use herein is trisodium phosphate ("TSP") which serves as a pH buffering agent. Useful concentrations of TSP range from about 0.1% to 0.5%.

Of course, useful cooking methods for cooking cereals include several different categories including boiling water cookers, steam cookers, low shear high pressure extruders, low shear low pressure cookers, adiabatic extruders, high shear extruders, and high shear extruders with steam pre-cookers (sometimes called conditioners). Broadly, these different categories, however, can be divided into short cook systems, e.g., 15 seconds to three minutes, and long cook cookers, e.g., 30 minutes to eight hours. Inasmuch as the cooking step must be continued for times sufficient to achieve desired flavor, in the preferred form the present method comprises long term cooking methods embodiments. These long term cooking methods include boiling water cookers, steam cookers (operated at lower steam pressures) and high shear extruders but with steam pre-cookers.

Notwithstanding the preferred employment of long duration cooking techniques and apparatus, the recent past has seen a continuing development in food cooking apparatus and in particular, short cook systems such as extruder cookers. These cooker extruders can rapidly cook or gelatinize cereal compositions. Typical cooking times can range from 30 seconds to two minutes. As a result, cooker extruders are extremely interesting to food processors for cereal products. Indeed, cooker extruders are now used to prepare many R-T-E cereals. However, unfortunately, the cook step, due to its brevity, fails to develop the desirable, traditional, fully cooked cereal flavor. The cooked cereal composition produced by food extruders, while fully cooked in the sense that the starch has been gelatinized, nonetheless has a flavor that is variously described as "flat," "green," or "raw." In R-T-E cereals which are to be highly flavored or given flavors other than traditional cooked cereal flavors, this deficiency can be overcome. However, the utility of food extrusion would be greatly advanced if the flavor deficiencies can be overcome.

More recently, the preparation of a cooked cereal dough using a cooker extruder especially a twin screw extruder has become commonplace. The cooked cereal doughs so prepared can be processed to form finished products of various size, textures, and shapes. Typically, the post, cooked cereal mass or dough formation step involves forming suitably sized and shaped individual pieces and drying to form finished cereal base pieces such as shreds, flakes, biscuits or puffs. Thereafter, the finished dried cereal base pieces can have a topical coating applied to provide desired taste and texture attributes. For example, in the preparation of a breakfast cereal, the topical coating can include a sugar coating. In other variations, such as for seasoned snack products, the topical coating can include salt alone or in combination with various seasoning blends.

Thereafter, the homogeneous blend is cooked at conditions of elevated temperature and/or pressure to gelatinize the starchy component of the farinaceous material and to develop the cooked cereal flavor components herein. The desirably high cooked cereal flavor is generally due to the presence of various pyrazine and pyrazine derivative compounds.

In many breakfast cereal formulations, in particular those containing larger particles such as whole grain wheat kernels for the production of wheat flakes, as the salt level is reduced in a cereal cooking operation (with other conditions being held steady), the resultant cooked cereal mass looks less cooked (and even containing white starch specs). Also, after toasting, the toasted flavor of low salt breakfast cereals may be reduced. The finished low salt breakfast cereal product can also undesirably exhibit a more brittle texture that can also result in more product breakage. For puffed products, e.g., low salt toasted and expanded cereal flakes, the extent or degree of expansion can also be reduced resulting in thinner flakes. Surprisingly, it is an advantage of the present invention that by cooking and subsequent breakfast cereal processing with added acids characterized by a reduced pH that many of the adverse effects of reduced salt content can be minimized or fully compensated.

For example, during the cooking step, structural changes in starch, which represents the main component in grains (by weight), are impacted by process conditions such as temperature and time as well as recipe parameters such as water content and presence of soluble components, e.g. salt and sugars. Cooking under acidic or slightly acidic conditions enhances the structural changes in starch, described by gelatinization, creation of soluble starch polymers and hydrolysis of starch polymers leading to lower molecular weight components. In the present invention, surprisingly it has been discovered herein that the positive effect of acidic, or slightly acidic, pH on structural changes in starch is a principle that can be used to counteract the negative effects of salt reduction on product quality in salt reduced breakfast cereals, in particular in salt reduced batch cooked and toasted breakfast cereals. By practicing the breakfast cereal processing steps under reduced pH conditions, structural changes in starch and other grain components such as protein are obtained substantially equivalent or even enhanced to that obtained under conventional salt levels even at the reduced salt levels of the present invention. The structural changes and reactions, mainly starch gelatinization, starch hydrolysis, changes in protein structure, Maillard Reactions as well as caramelization reactions lead to enhanced product characteristics with improved color, flavour and texture, most useful in low salt breakfast cereal formulations. For example, lower pH catalyzed enhanced starch hydrolysis may create a larger amount of low molecular weight components that can participate in carmelization reactions and contribute to enhanced flavour and color in the finished product. Or, for example, low pH catalyzed starch gelatinization in combination with starch hydrolysis may lead to improved starch cook quality and improved texture, strength and bowl life.

Preferred for use herein are steam cookers and high shear extruders with steam pre-cookers. When steam cookers are employed, the steam pressures typically range from about 15 to 30 psig (∼207-310kPa.) and cook times are considerably shortened, ranging from about 0.5 to 1.5 hours. When high shear extruders with steam pre-cookers are employed, the blend remains in the pre-cooker or conditioner for about 0.5 to 1.0 hours at a steam pressure of about 10 to 15 psig. (165-207kPa.) prior to finish cooking in the extruder. Useful cooking temperatures essentially range from about 250°F to 300°F (121°C to 149°C).

The moisture content of the cooked mass at the end of the cooking step can range from about 10-60%. In certain embodiments the moisture content can range from 20-45%. In other embodiments the moisture content can range from about, about 25-35%. The cooking step is complete when each kernel or kernel particle has been changed from a hard chalky white to a light golden brown and is soft and translucent. A batch is undercooked if large numbers of grain particles have chalky white centers and is overcooked if the particles are excessively soft, mushy and sticky. Properly cooked particles are rubbery but firm and resilient under finger pressure and they contain no raw starch. Raw starch present after cooking remains through further processing and can show up as undesirable white spots in the finished product.

An advantage of reduced cook time relative to higher pH bath cook operations (on the order of 5-20% reduction in required cook time) is the reduction in energy usage and required capital to produce a given quantity of cooked cereal dough mass or capital avoidance; alternatively, for a given installed cook capacity, greater efficiency and throughput to produce more cooked cereal in a given time period.

Optionally, the present methods can additionally include dumping and/or cooling and/or tempering to arrest cooking and cool and space the material for feeding into the forming step.

Thereafter, the cooked cereal dough so realized is characterized by a lower sodium concentration (as characterized by conductivity value) and reduced pH but with enhanced overall flavor can be subsequently processed in conventional manner in order to realize the present R-T-E cereals. The present methods additionally comprise a step of forming the cooked cereal into pieces of desired shape and size.

The post cooking processing or forming step of cooked cereal mass, mash or doughs can vary widely depending on the desired R-T-E cereal. In one highly preferred embodiment of the present invention, the cooked cereal dough prepared as described above is subsequently extruded employing a low pressure extruder into a pelletizer. The pelletizer fabricates the cooked dough into pellets characterized by a moisture content of 26% to 30%. The size of pellets can vary and generally range from about 40 to 60, preferably 45 to 50 per 10g 9wet basis). The pellets can then be dried in a dryer at temperatures ranging from 150°F to 200°F (65-93°C) and reduced moisture to a range of 18% to 23% to form dried pellets. The dried pellets can then be fed to a flaking roll or roll pair wherein they are reduced to a thickness ranging from about 0.08 to 0.10 mm (0.030-0.040 inch) to form wet flakes.

In still another variation, the dough can be sheeted to form sheets of dough (e.g., 25 to 800 microns in thickness) and the individual pieces formed by cutting the sheet into individual pieces or by stamping out planar shaped pieces from the dough sheet especially in squares or other shapes especially tessellated shapes.

In still another variation, the cooked cereal dough can be extruded through a die imparting a desired peripheral shape to form an extrudate cooked cereal dough rope. The dough rope can be cut to form individual shaped pieces.

In still another variation, the cooked cereal dough can be fed to a biscuit forming device (see, for example, U.S. 5,342,188, entitled "Device For Crimping and Cutting Dough Ropes, issued August 30, 1994 to C. E. Zimmermann,) which forms the dough into biscuit shaped individual pieces.

In another preferred variation, the cooked cereal dough is formed into individual "O" shaped pieces or rings, biscuits, shreds, figurines, letters, spheres or other geometric shapes, nuggets, or even irregular shapes.

The present methods additionally comprise a step of toasting and drying the shaped and sized formed individual pieces to form a ready-to-eat cereal. For example, in a preferred embodiment, the formed pieces such as in the particular form of wet flakes can then be toasted in a toaster (e.g., a jet zone heater) that simultaneously reduces the moisture content to about 1% to 3%, provides a toasted flavor and partially expands the product to improve its texture and other organoleptic attributes to provide toasted dried flakes. The desirable cooked cereal and toasted flavors are fully developed in the toaster. The flavors are generally attributable to the presence of pyrazines and other volatile compounds. It is a further surprising advantage of the present invention that toasting flavor increases with decreasing pH. This seems to be in line with observed a beneficial color development with decreasing pH.

The skilled artisan will appreciate that the drying step depends in important part upon the desired end product. For example, for end products in the form of puffable half products or pellets for snack production, the drying step can be practiced to provide a finish moisture content of about 10 to 15%. However, when the desired end product is an R-T-E cereal, drying the pellets to these moisture contents may only be an intermediate or sub-step prior to, for example, flaking the dried pellets to form "wet" flakes. These "wet" flakes can then be subjected to a finish or final drying step wherein the pieces are dried to final dried moisture contents of 1 to 4% such as by toasting.

The present cereal compositions can be fabricated into any of a variety of common R-T-E cereal forms including, shreds, biscuits, flakes, or any common R-TE cereal form. The present cereal compositions can also be formulated and fabricated so as to provide puffed cereals of various shapes and sizes. Especially desirable for use herein are flakes, especially toasted flakes.

For example, a great number of R-T-E cereals and snack products are prepared from cooked cereal doughs that are formed into pellets. The cooked cereal dough can be fed to a pellet former to form pellets. For example, in the preparation of R-T-E cereals in flake form, the pellets are sized to have a pellet count of about 35 to 50 per 10g and a moisture content of 16 to 20%.

In the preparation of a flaked R-T-E cereal, the pellets can be partially dried to moisture contents of about 18 to 20%. The pellets can then be formed into "wet" flakes having a thickness of about 380 to 635 µm (0.015 to 0.025 inch), preferably while warm 76.6 to 87.8°C (170 to 190°F) to form desirably shaped and sized wet flakes. In still other variations, topical application of an acidic solution can be practiced prior to the toasting step. For best results, the topical acidic solution application is practiced in combination with low pH low added salt cooking but can also be practiced with only low added salt cooking.

In another variation, the drying step can involve heating the pieces under conditions that not only dry the piece but also cause the piece to expand to form dried and puffed or flaked finished pieces. For example, pellets can be gun puffed to form dried puffed R-T-E cereal products. The wet flakes can be toasted to dry, expand and tenderize to form finished R-T-E cereal flakes.

In still another variation as described above, the dough can be extruded under conditions of temperature and pressure so as to puff and expand (the "direct expansion" technique) and sectioned or cut into individual pieces to form individual expanded or puffed R-T-E cereal or snack pieces.

In still another variation, the pieces or pellets can be deep fat fried to form dried puffed fried low sodium, low pH finished cereal products. Such products can absorb about 5 to 35% of frying fat during the drying and puffing step. In other variations, an oil topical coating optionally with salt and/or flavors is applied to form finished dried snack products.

In commercial practice, one or more of the present methods' steps can be combined and performed in or by a single piece of equipment. For example, a dry mix of cereal ingredients including rice bran oil can be admixed with water and/or steam in a cooker extruder such as a single screw or twin screw. The cooker extruder heats, cooks and works the cereal ingredients to form a rice bran oil containing cooked cereal dough. In one variation, referred to in the art as direct expansion, the extruder conditions are such that upon extrusion, the cooked cereal dough expands and dries and is severed into small pieces to form R-T-E cereal pieces. The R-T-E cereal pieces can be in final form. In slight variations, the R-T-E cereal pieces can be further dried to final moisture contents, especially if a sugar coating is applied.

If desired, the present cereal compositions can be fabricated into presweetened R-T-E cereals such as by the topical application of a conventional sweetener coating. Both conventional sugar coatings and coatings employing high potency sweeteners, especially aspartame, sucralose, stevia, and potassium acesulfame, are known and can be used to provide presweetened cereals for use herein. If desired, all or a portion of the high potency sweetener can be added to the formulation from which the cereal base is prepared, to the topical pre-sweetener coating or sub-divided between the base and the coating as desired. The coating can also be fortified with fiber such as soluble fiber provided by inulin, polydextrose, solublized corn fiber and mixtures thereof. The coating can also contain insoluble fiber ingredients, e.g., corn bran and/or wheat bran.

If employed, the topical sweetening is applied in sufficient amounts such that after drying to remove added moisture associated with the sugar coating solution, the sugar coating is present in a weight ratio of sugar coating to cereal base of about 1:100 to about 50:100, preferably 10:100 to about 40:100. Typically, the sugar coating solution will have a blend of sugars and will comprise about 4 to 20% moisture. When higher amounts of the sugar coating solution, particularly for those solutions employing higher moisture levels, the slurry coated cereal pieces may be subjected to a final drying step to remove the added moisture from the sugar coating to provide finished dried products having a moisture content of about 1 to 5%.

In still other variations, the present invention can be combined with other reduction techniques such as the salt partitioning techniques described in US 4,963,373 R-T-E Cereal Composition and Method of preparation" (issued Oct. 16, 1990 to Fan et al) wherein a topical application of a salt spray is taught.

In still other variations, a topical application of an acidic solution prior to the toasting step can be practice. For best results, this pre-toasting or puffing topical application is practiced in combination with the low pH, low added salt cooking but can be practiced alone or in combination with only low added salt cooking. For example, an low pH aqueous topical acid spray (within the present pH range values) can be topically applied to wet cereal flakes immediately prior to a toasting step to provide a reduced pH condition that can lead to improvements in the development of desirable toasted surface color and toasting flavor development. In one convenient execution, the acidic spray is applied to wet flakes immediately before being toasted such as in a jet zone type toaster.

The dried cereal pieces, however formed, can optionally be provided with a topical coating such as a sugar coating. In one variation, typically referred to as a wet sugar coating process, a concentrated liquid sugar syrup is applied to dried cereal pieces to form sugar coated pieces that are subsequently dried to remove the added moisture from the sugar coating solution to form presweetened R-T-E finished cereal pieces. In certain variations of this embodiment, a portion or preferably all of the sugar is replaced with an equivalent level of low conversion maltose (see, for example USSN 60/565,473 "Low Sugar Presweetened Coated Cereals and Method of Preparation" filed 04/26/2004).

In still other variations, the present low salt breakfast cereal products can be blended with portions of breakfast cereal types or cereal inclusions (e.g., clusters, raisins, salted nuts) to provide an acceptable taste profile notwithstanding the reduced salt content herein.

If desired, the present cereal compositions can be fabricated into presweetened R-T-E cereals such as by the topical applications of a conventional sweetener coating followed by a drying step to remove the moisture added by the coating slurry. Both conventional sugar coatings and coatings employing high potency sweeteners, especially aspartame and potassium acesulfame, are known and can be used to provide presweetened cereal for use herein. The topical sweetener coating can also comprise flavors, vitamins, minerals and other adjuvants.

The R-T-E cereal pieces so fabricated have relatively low water activities ranging typically from about 0.1 to 0.15 reflecting moisture content ranging from about 1% to 4%.

### Finished product attributes

The R-T-E cereal prepared as described above can either be packaged or optionally can be coated with either a sugar coating and/or vitamin coating.

The R-T-E cereals of the present invention prepared according to the above described method of preparation can be characterized by a pH ranging from about 4.2-5.7, preferably about 4.8-5.2. The finished cereals are characterized by a conductivity value ranging from about 0.1-2.8 milli Siemens per centimeter("mS/cm"). In certain embodiments, the present products have a sodium content of 500mg sodium/100g (wet basis) or less.

The present cereal products are characterized by a reduced pH as a result of acid addition whereby the reduced pH and reduced salt products re-gain or further improve product quality of salt-reduced products.

Still another advantage of the present invention resides in the diminution in the levels of undesirable acrylamide formation in the finished breakfast cereal.

In a preferred embodiment for ready-to-eat cereals, the present cereal compositions can be further defined in part by low fat levels, i.e., the present cereals do not comprise added or absorbed fat. Thus, the total fat or lipid component is quite low. The fat content results from the native fat associated with the starchy cereal component(s). Permissible low fat additions can also result from adding emulsifiers and from vitamin or flavor addition. However, the total fat content of the cereal compositions should be less than about 3%, preferably less than about 2%. Preferably, the R-T-E cereal is substantially free of any fat or oil incorporated into the cooked cereal dough. Such "added fat" is to be distinguished from "absorbed fat" that is picked up during deep fat frying used to prepare finished snack products herein.

The finished dried R-T-E cereal and cereal based snack products fabricated with acid fortified cooked cereal doughs herein are useful as breakfast cereal food products. Surprisingly, the finished R-T-E cereal and cereal based snack products provided herein are remarkably similar to their unfortified counterparts full salt level bearing, notwithstanding the presence of their reduced salt content. The products are characterized by good flavor, good texture and other favorable organoleptic attributes. Notwithstanding their highly acceptable taste, appearance and texture attributes, the products are nonetheless characterized as having low levels of sodium.

The products can be packaged and distributed in conventional form.

In the following examples, the measurement of pH and conductivity employ the following protocols.

### Analysis of pH

- Principle:
   ∘ measurement of the difference in potential between a glass electrode and a reference electrode placed in the same sample: pH is read using a pH meter
- Apparatus:
   ∘ combined glass / reference electrode, e.g. Orion Sureflow (no. 8172BN)
   ∘ Hanna 211 model pH meter
- Procedure
   ∘ Calibrate the pH meter according to SOPinst208.
   ∘ Ensure the sample is homogeneous, by grating, grinding or homogenizing it as appropriate to the sample type.
   ∘ Prepare a 10% w/w solution or suspension in hot (60 ± 5°C) water, in a 250 mL beaker. If the sample is slow to dissolve, place the beaker on a steam bath for a maximum of 10 minutes and stir the contents periodically.
   ∘ Quickly cool the suspensions to 20 ± 2°C by placing in a water bath without stirring (to avoid uptake of carbon dioxide from the air).
   ∘ Filter the suspensions. Carefully dip the pH electrode and the temperature probe into the filtrate, ensuring that the electrode and probe do not touch the follower or the base of the beaker.
   ∘ If the sample was "fatty", clean the electrode and temperature probe by wiping them successively with pieces of cotton wool moistened with water-saturated diethyl ether and industrial methylated spirits. Then store them in electrode storage solution.
- Repeatability
   ∘ The difference between the results of two determinations carried out by the same analyst immediately after one another on the same test sample using the same apparatus should not exceed 0.03 units. (This figure has been derived from in-house data).
- Uncertainty of measurement
   ∘ The typical expanded uncertainty of measurement is approximately 0.03 pH units. This has been derived from data for fruit juice, tomato ketchup and soluble coffee. This value is based on a standard uncertainty multiplied by a coverage factor k = 2, providing a level of confidence of approximately 95%.
- Internal control
   ∘ Ensure that the balance has been properly calibrated.
   ∘ Ensure that the pH standard buffers are within their expiry dates.
   ∘ Ensure that the level of the filling solution in the internal electrode is approximately 2.5 cms below the filling hole. If necessary, add more filling solution.
   ∘ Whenever possible, analyze a "reference sample". The pH of which is known at the same time as the test samples. Suitable "reference samples" include "CHEM" Test materials, such as TMS, FRJ and KTA.
   ∘ Ensure that the temperature probe has been calibrated.

### Analysis of Conductivity

- Apparatus
   ∘ Hanna multirange conductivity meter
   ∘ measurement range
      0 - 199.9 µS / cm
      0 - 1999 µS / cm
      0 - 19.99 mS/cm
      0 - 199.9 mS/cm
- Procedure
   ∘ Calibrate the conductivity meter.
   ∘ Ensure the sample is homogeneous, by grating, grinding or homogenizing it as appropriate to the sample type.
   ∘ Prepare a 10% w / w solution or suspension in hot (60 ± 5°C) water, in a 250 mL beaker. If the sample is slow to dissolve, place the beaker on a steam bath for a maximum of 10 minutes and stir the contents periodically.
   ∘ Quickly cool the suspensions to 20 ± 2°C by placing in a waterbath without stirring (to avoid uptake of carbon dioxide from the air).
   ∘ Filter the suspension.
   ∘ Measure the conductivity of the filtrate at room temperature.

### Analysis of Color

- color measurements were conducted according to the GMI method color-006, using a Minolta Chroma Meter

### EXAMPLES

### EXAMPLE 1:

The effect of pH control on improved product quality of low salt breakfast cereals.

### Method of sample preparation/manufacture

A whole corn flake R-T-E cereal of reduced salt concentration is made according to the following procedure:

A syrup is first prepared by admixing sugar (2.5 kg), selected levels of sodium chloride, malt syrup (1.75 kg), and water (∼ 7 kg) into a homogeneous blend. Corn grits (32 kg) are added to the pre-steamed cooker. The prepared syrup is introduced into a pressure cooker. The mixture was cooked under pressure (18 to 25 psig) for 120 minutes at a temperature of about 270°F until the dough was fully cooked. The cooked corn grits were then dried to a moisture of 22 to 23% and afterwards processed through flaking roles to obtain the flaked finished product shape. Thereafter, the flakes were dried and toasted at a temperature between 350°F to 450°F to a golden brown color and a finished product moisture of less than 3.5%. The corn flake sample 1 was produced with a sodium chloride addition in the syrup to obtain 660 mg of sodium/100 g. Sample 2 was produced with 320 mg sodium/100g which represents a sodium reduction of more than 50%. Sample 3 was produced with the same amount of sodium as sample 2 but 0.1% citric acid, based on the total formula weight, was added to the syrup to modify the pH of the dough during cooking to slightly acidic. The toasted finished product corn flakes samples were analyzed by pH, conductivity, color and sensory, according to the methods described above. The results are shown in Table 1.

**Table 1:**

| Finished Product Characteristics of Corn Flakes, Low Salt Corn Flakes and Low Salt Corn Flakes with Adjusted pH. | | | | |
|---|---|---|---|---|
| Sample | pH | Conductivity [mS] | Color [L-value] | toasted flavour |
| 1 | 5.8 | 3.50 | 56.6 | Well developed toasted flavour |
| 2 | 5.8 | 1.75 | 61.3 | Significantly less toasting flavour than Sample 1 |
| 3 | 4.8 | 1.75 | 55.6 | Well developed toasting flavour, equivalent to Sample 1 |

The data in Table 1 show that a reduction in sodium from 660 mg to 320 mg (∼50% reduction) produced a corn flake with much lighter color and less toasting flavour. These changes in product characteristics are typically perceived as negative by consumers. At this reduced salt level, a modification of pH from 5.8 to 4.8 (sample 3) gave an increase in color and toasting flavour equivalent to a high salt corn flake (sample 1) and, with that, a significant improvement in product quality and consumer perception.

### EXAMPLE 2:

The effect of the use of various acids on improve product quality in salt reduced breakfast cereals

### Method of sample preparation / manufacture

The breakfast cereal corn flakes samples were produced according to the method described for example 1. Samples 4 and 5 were produced with a sodium chloride addition to the syrup that corresponds to 320 mg sodium/100 g in the finished product breakfast cereal. This is equivalent to the sodium level in samples 2 and 3. The pH of the dough in sample 4 was adjusted by adding 0.2% acetic acid, based on total formula weight, to the syrup. The pH of the dough in sample 5 was adjusted by adding 0.035% phosphoric acid, based on total formula weight, to the syrup. The toasted finished product corn flakes samples were analyzed by pH, conductivity, color and sensory, according to the methods described above. The results are shown in Table 2.

**Table 2: Analytical Data for Finished Low Salt Corn Flakes Containing Various Acids.**

| Sample | acid | pH | Conductivity [mS] | Color [L-value] | toasted flavour |
|---|---|---|---|---|---|
| 1 | None | 5.8 | 3.50 | 56.6 | Well developed toasted flavour |
| 2 | None | 5.8 | 1.75 | 61.3 | Significantly less toasting flavour than Sample 1 |
| 3 | Citric acid | 4.8 | 1.75 | 55.61 | Well developed toasted flavour |
| 4 | Acetic acid | 5.01 | 1.73 | 54.81 | Well developed, as 3 |
| 5 | Phospho ric acid | 4.87 | 1.81 | 54.29 | Well developed. as 3 |

The data in Table 2 show that different acids can be used to adjust the pH level to slightly acidic and that, at the achieved pH level, the finished product characteristics, color and toasting flavor, of the low salt corn flake samples 3, 4 and 5 were significantly improved over the low salt corn flake produced without pH adjustment (sample 2). If the pH is approximately the same, there are no significant differences in finished product color or toasted flavor when using organic and inorganic acids, in this example citric acid, acetic acid and phosphoric acid.

### Example 4:

The effect of organic and inorganic acids on conductivity of salt solutions.

### Method of preparation

Two salt solutions were prepared using de-ionized water and sodium chloride. The salt solutions contained 0.5% or 1% of sodium chloride. The pH of the salt solutions was modified using an organic acid, citric acid, and an inorganic acid, HCl. The pH was modified from neutral, 6.3, to 3.9 and the conductivity was measured at various pH levels. The measurements were done in triplicate.

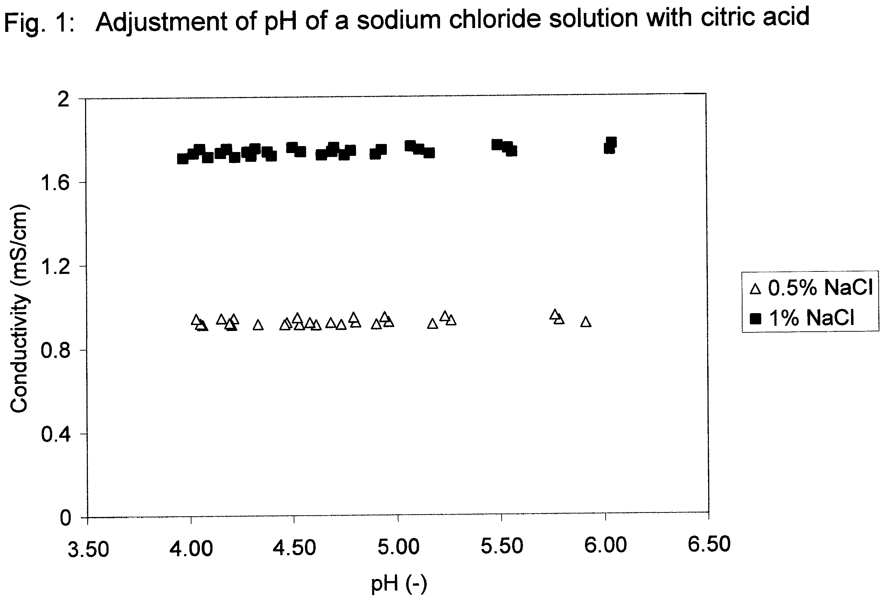

Figure 1 depicts pH and Conductivity of sodium chloride solutions, pH Adjusted with HCl. Figure 1 shows pH and conductivity data for salt solutions containing 0.5% and 1% NaCl, pH adjusted with HCl. It can be seen that the reduction in pH with HCl did not change the conductivity of the sodium chloride solutions.

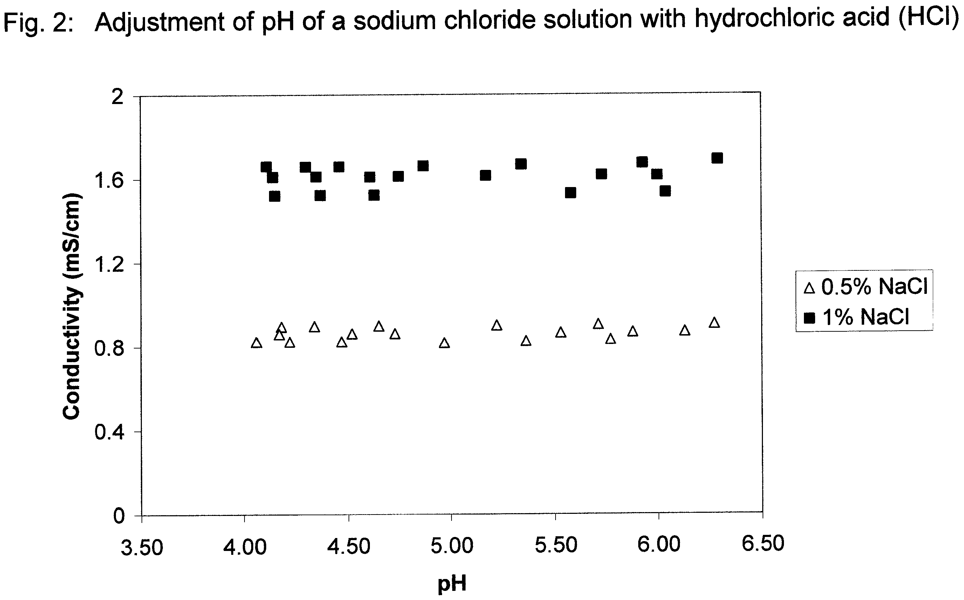

Figure 2 shows pH and conductivity data for salt solutions containing 0.5% and 1% NaCl, pH adjusted with citric acid. It can be seen that the reduction in pH with citric acid did not change the conductivity of the sodium chloride solutions

## Claims

1. A method for preparing a cooked cereal composition of low salt content that nonetheless has a good cooked cereal flavor, comprising the steps of:
A. cooking a homogeneous blend of
1. 60% to 98% by dry weight of the blend of a farinaceous material having a starchy component,
2. 1.0% to 1.5% dry weight of the blend of sodium chloride, and
3. sufficient amounts of a water soluble acidulant to provide said blend having a pH ranging from 3.5 to 5.7,
and wherein the blend has a conductivity ranging from 0.1-2.8 mS/cm with added moisture for a period of time sufficient to substantially fully cook said blend;
B. forming the cooked cereal mass or dough into pieces of desired shape and size; and
C. toasting and drying the pieces to form a dried ready-to-eat cereal having a pH ranging from 3.5-5.7 and a conductivity ranging from 0.1-2.8 mS/cm and a moisture content of 2-5%.

2. The method of claim 1 wherein in Step A, the blend comprises a water-soluble organic acid selected from the group consisting of citric acid, malic acid, and mixtures thereof.

3. The method of claim 2
wherein in Step A, the blend comprises:
1. 65% to 95% by weight of the blend of the farinaceous material,
2. 0.1% to 9% by weight of the blend of sucrose,
3. a potassium ion concentration of 0.05% to 0.1%
and wherein the cooking step is practiced to gelatinize the starch wherein said gelatinization is at least 90%.

4. The method of claim 3 wherein in Step C, the method comprises the sub-steps of:
forming the dough into pellets, flaking the pellets into flakes, and
toasting the flakes to form dried, toasted ready-to-eat cereal flakes.

5. The method of claim 4 wherein at least a majority of the farinaceous material is wheat wherein the dried, toasted ready-to-eat cereal flakes have a total pyrazine concentration of 5 to 15 ppm.

6. A method according to any one of claims 1 to 5 wherein the cooking step is carried out by cooker extruders and the cooking time is from 30 seconds to two minutes.

7. The method of any one of claims 1 to 6 wherein the method comprises:
forming the cooked cereal dough into pellets having a moisture content of 26% to 30%,
and puffing the pellets to form dried, puffed ready-to-eat cereal pieces.

8. A dry, low salt R-T-E cereal composition of superior flavor, comprising:
A. 80% to 95% by weight of the composition of a farinaceous component;
B. sufficient amounts of water-soluble salts to provide a conductivity ranging from 0.1-2.8 mS/cm; and
C. sufficient amounts of added edible acid to provide a pH of 3.5 - 5.7.

9. The low salt composition of claim 8 wherein the edible acid comprises an organic acid selected from the group consisting of citric acid, malic acid, and mixtures thereof.

10. The low salt composition of claim 9 wherein the total acrylamide concentration is less than 250 ppb and wherein the composition comprises less than 0.5% of sodium (dry weight).

11. The low salt composition of claim 9 having 10 ppm to 20 ppm by weight of the composition of pyrazines.

12. The method of claim 2 wherein the homogeneous blend additionally comprises:
0.1% to 0.5% trisodium phosphate.

13. The low salt composition of claim 10 in the form of puffed pieces.

14. The low salt composition of claim 10 in the form of toasted flakes.

## Patentansprüche

1. Ein Verfahren zur Herstellung einer gekochten Cerealienzusammensetzung mit niedrigem Salzgehalt, die dennoch einen guten gekochten Cerealiengeschmack aufweist, umfassend die Schritte von:
A. Kochen einer homogenen Mischung aus
1. 60 bis 98 Trockengew.-% der Mischung eines mehlhaltigen Materials mit einer stärkehaltigen Komponente,
2. 1,0 bis 1,5 Trockengew.-% der Mischung an Natriumchlorid, und
3. ausreichenden Mengen eines wasserlöslichen Säuerungsmittels, um die Mischung mit einem pH-Wert im Bereich von 3,5 bis 5,7 bereitzustellen,
und wobei die Mischung eine Leitfähigkeit im Bereich von 0,1-2,8 mS/cm mit zugegebener Feuchtigkeit hat, für eine Zeitspanne ausreichend um die Mischung im Wesentlichen vollständig zu kochen;
B. Formen der Masse oder des Teigs aus gekochten Cerealien zu Stücken von gewünschter Form und Größe; und
C. Rösten und Trocknen der Stücke, um getrocknete, verzehrfertige Cerealien mit einem pH-Wert von 3,5-5,7 und einer Leitfähigkeit im Bereich von 0,1-2,8 mS/cm und einem Feuchtigkeitsgehalt von 2-5% zu bilden.

2. Das Verfahren gemäß Anspruch 1, wobei in Schritt A die Mischung eine wasserlösliche organische Säure umfasst, ausgewählt aus der Gruppe bestehend aus Zitronensäure, Äpfelsäure und Mischungen davon.

3. Das Verfahren gemäß Anspruch 2
wobei in Schritt A die Mischung umfasst:
1. 65 bis 95 Gew.-% der Mischung des mehlhaltigen Materials,
2. 0,1 bis 9 Gew.-% der Mischung an Saccharose,
3. eine Kaliumionenkonzentration von 0,05% bis 0,1 %
und wobei der Kochschritt zum Gelieren der Stärke durchgeführt wird, wobei die Gelierung mindestens 90% beträgt.

4. Das Verfahren gemäß Anspruch 3, wobei in Schritt C das Verfahren die Unterschritte umfasst:
Formen des Teigs zu Pellets, Flockieren der Pellets zu Flocken, und
Rösten der Flocken um getrocknete, geröstete, verzehrfertige Cerealienflocken zu bilden.

5. Das Verfahren gemäß Anspruch 4, wobei mindestens ein Großteil des mehlhaltigen Materials Weizen ist, wobei die getrockneten, gerösteten, verzehrfertigen Cerealienflocken eine Gesamtpyrazinkonzentration von 5 bis 15 ppm aufweisen.

6. Ein Verfahren gemäß einem der Ansprüche 1 bis 5, wobei der Kochschritt von Kochextrudern durchgeführt wird und die Kochzeit 30 Sekunden bis zwei Minuten beträgt.

7. Das Verfahren gemäß einem der Ansprüche 1 bis 6, wobei das Verfahren umfasst:
Formen des gekochten Cerealienteigs zu Pellets mit einem Feuchtigkeitsgehalt von 26% bis 30%, und Puffen der Pellets, um getrocknete, gepuffte, verzehrfertige Cerealienstücke zu bilden.

8. Eine getrockene, salzarme, verzehrfertige Cerealienzusammensetzung mit hervorragendem Geschmack, umfassend:
A. 80 bis 95 Gew.-% der Zusammensetzung einer mehlhaltigen Komponente;
B. ausreichende Mengen wasserlöslicher Salze, um eine Leitfähigkeit im Bereich von 0,1-2,8 mS/cm bereitzustellen; und
C. ausreichende Mengen zugesetzter essbarer Säure, um einen pH-Wert von 3,5 - 5,7 bereitzustellen.

9. Die salzarme Zusammensetzung gemäß Anspruch 8, wobei die essbare Säure eine organische Säure umfasst, ausgewählt aus der Gruppe bestehend aus Zitronensäure, Äpfelsäure und Mischungen davon.

10. Die salzarme Zusammensetzung gemäß Anspruch 9, wobei die gesamte Acrylamidkonzentration weniger als 250 ppb beträgt und wobei die Zusammensetzung weniger als 0,5% Natrium (Trockengewicht) umfasst.

11. Die salzarme Zusammensetzung gemäß Anspruch 9 mit 10 ppm bis 20 ppm, bezogen auf das Gewicht der Zusammensetzung an Pyrazinen.

12. Das Verfahren gemäß Anspruch 2, wobei die homogene Mischung zusätzlich umfasst:
0,1% bis 0,5% Trinatriumphosphat.

13. Die salzarme Zusammensetzung gemäß Anspruch 10 in Form von gepufften Stücken.

14. Die salzarme Zusammensetzung gemäß Anspruch 10 in Form von gerösteten Flocken.

## Revendications

1. Méthode pour préparer une composition de céréale cuite ayant une faible teneur en sel et qui néanmoins a une bonne saveur de céréale cuite, comprenant les étapes suivantes :
A. cuisson d'un mélange homogène de
1. 60 % à 98 %, en poids sec du mélange, d'un matériau farineux ayant un composant amylacé,
2. 1,0 % à 1,5 %, en poids sec du mélange, de chlorure de sodium, et
3. une quantité d'acidulant soluble dans l'eau suffisante pour que soit obtenu ledit mélange ayant un pH situé dans la plage allant de 3,5 à 5,7,
et dans lequel le mélange a une conductivité située dans la plage allant de 0,1 à 2,8 mS/cm avec de l'humidité ajoutée pendant une période de temps suffisante pour que ledit mélange soit pratiquement entièrement cuit ;
B. mise de la masse ou de la pâte de céréale cuite sous la forme de morceaux ayant une forme et une taille souhaitées ; et
C. grillage et séchage des morceaux pour former une céréale séchée prête à manger ayant un pH situé dans la plage allant de 3,5 à 5,7 et une conductivité située dans la plage allant de 0,1 à 2,8 mS/cm et une teneur en humidité de 2 à 5 %.

2. Méthode selon la revendication 1, dans laquelle, dans l'étape A, le mélange comprend un acide organique soluble dans l'eau choisi dans le groupe constitué par l'acide citrique, l'acide malique, et leurs mélanges.

3. Méthode selon la revendication 2, dans laquelle, dans l'étape A, le mélange comprend :
1. 65 % à 95 %, en poids du mélange, du matériau farineux,
2. 0,1 % à 9 %, en poids du mélange, de saccharose,
3. une concentration d'ions potassium de 0,05 % à 0,1 %,
et dans laquelle l'étape de cuisson est effectuée pour gélatiniser l'amidon, ladite gélatinisation est d'au moins 90 %.

4. Méthode selon la revendication 3, dans laquelle, dans l'étape C, la méthode comprend les sous-étapes suivantes :
mise de la pâte sous forme de pastilles, floconnage des pastilles en flocons, et
grillage des flocons pour former des flocons de céréale prêts à manger grillés séchés.

5. Méthode selon la revendication 4, dans laquelle au moins une majorité du matériau farineux est constituée de froment, dans laquelle les flocons de céréale prêts à manger grillés séchés ont une concentration totale de pyrazine de 5 à 15 ppm.

6. Méthode selon l'une quelconque des revendications 1 à 5, dans laquelle l'étape de cuisson est effectuée au moyen d'unités de cuisson-extrusion et le temps de cuisson est de 30 secondes à deux minutes.

7. Méthode selon l'une quelconque des revendications 1 à 6, laquelle méthode comprend :
la mise de la pâte de céréale cuite sous la forme de pastilles ayant une teneur en humidité de 26 % à 30 %, et
le soufflage des pastilles pour former des morceaux de céréale prêts à manger soufflés séchés.

8. Composition de céréale R-T-E sèche à faible teneur en sel ayant une saveur supérieure, comprenant :
A. 80 % à 95 % en poids de la composition d'un composant farineux ;
B. des quantités de sels solubles dans l'eau suffisantes pour conférer une conductivité située dans la plage allant de 0,1 à 2,8 mS/cm ; et
C. une quantité d'acide comestible ajouté suffisante pour conférer un pH de 3,5 à 5,7.

9. Composition à faible teneur en sel selon la revendication 8, dans laquelle l'acide comestible comprend un acide organique choisi dans le groupe constitué par l'acide citrique, l'acide malique, et leurs mélanges.

10. Composition à faible teneur en sel selon la revendication 9, dans laquelle la concentration totale d'acrylamide est inférieure à 250 ppb, et laquelle composition comprend moins de 0,5 % de sodium (en poids sec).

11. Composition à faible teneur en sel selon la revendication 9, ayant 10 ppm à 20 ppm, en poids de la composition, de pyrazines.

12. Méthode selon la revendication 2, dans laquelle le mélange homogène comprend en outre 0,1 % à 0,5 % de phosphate trisodique.

13. Composition à faible teneur en sel selon la revendication 10, sous la forme de morceaux soufflés.

14. Composition à faible teneur en sel selon la revendication 10, sous la forme de flocons grillés.
